# EUROPÄISCHE PATENTANMELDUNG

(11) **EP 0 581 071 A1**
(43) Veröffentlichungstag der Anmeldung: **02.02.1994**
(21) Anmeldenummer: 93110871.6
(22) Anmeldetag: 07.07.1993
(51) Int. Cl.: B64D 9/00

(54) **Riegelelement**

(30) Priorität: 27.07.1992 DE 4224819
(71) Anmelder: Telair International Cargo Systems GmbH, D-83734 Hausham (DE)
(72) Erfinder: Sundseth, Jarl, D-83727 Schliersee (DE)
(74) Vertreter: Bohnenberger, Johannes, Dr.

(57) **Zusammenfassung**

Bekannt ist ein Riegelelement zum verriegelten Halten von Gegenständen, insbesondere von Containern im Frachtraum von Flugzeugen. Das bekannte Riegelelement weist einen Haken (10) auf, der um eine horizontale Achse aus einer unteren Ruheposition in eine obere Halteposition verschwenkbar in einem Rahmen (10) gehalten ist und an seinen Enden eine Hakenplatte (11) aufweist. Die Hakenplatte (11) ist auf einer Achse (13) am Haken (10) in einer - in der Halteposition - horizontalen Ebene aus einer Halteposition in eine Freigabeposition verschwenkbar. Es ist mindestens eine Abweisrolle (12) vorgesehen, die - in der Halteposition - um eine vertikale Achse (13) derart drehbar am Haken gelagert ist, daß ein, die Hakenplatte (11) verschwenkender Gegenstand an der Abweisrolle (12) entlang führbar ist. Es sind Federmittel (16, 19) vorgesehen, die derart ausgebildet sind und mit der Hakenplatte (11) in Wirkverbindung stehen, daß die Hakenplatte (11) in die Einhakposition beaufschlagt wird. Beim bekannten Gegenstand sind zwei Abweisrollen vorgesehen, die jeweils auf einer gesonderten Achse gelagert sind. Die Hakenplatte ist auf einer dritten Achse gelagert. Das so ausgebildete Riegelelement ist äußerst aufwendig konstruiert und relativ anfällig. Es wird vorgeschlagen, eine einzige Abweisrolle (12) vorzusehen und auf der Achse (13) der Hakenplatte (11) zu lagern.

## Beschreibung

Die Erfindung betrifft ein Riegelelement nach dem Oberbegriff des Patentanspruches 1.

Zum verriegelten Halten von Gegenständen, nämlich Containern oder Paletten im Frachtraum von Flugzeugen, verwendet man zum einen einfache Riegelelemente, die hakenförmig ausgebildet sind und bei Bedarf zum Befestigen der Container hochgeklappt werden. Andere Riegelelemente, nämlich solche der eingangs genannten Art, sind insofern komplizierter aufgebaut, als sie im hochgeklappten Zustand, also in ihrer eigentlichen Halteposition, der Bewegung eines Containers im wesentlichen senkrecht zur Einhakrichtung "ausweichen" müssen. Das eigentliche Einhakelement, nämlich die Hakenplatte am Ende des Hakens muß hierbei ausweichen. Damit gleichzeitig auf den Haken keine allzu hohen Kräfte senkrecht zu seiner Verschwenkebene wirken, sind bei den herkömmlichen Riegelelementen zwei Abweisrollen vorgesehen. Die Abweisrollen und der Haken sind auf insgesamt drei gesonderten Achsen gelagert. Diese Konstruktion ist aufwendig und anfällig.

Der Erfindung liegt die Aufgabe zugrunde, ein Riegelelement der eingangs genannten Art dahingehend weiterzubilden, daß der Aufbau vereinfacht und die Standfestigkeit erhöht werden.

Diese Aufgabe wird durch die im Kennzeichen des Patentanspruches 1 angegebenen Merkmale gelöst.

Ein wesentliches Element der Erfindung liegt darin, daß eine einzige Rolle vorgesehen ist, die auf der Achse der Hakenplatte gelagert ist. Statt drei Achsen mit insgesamt sechs Lagern ist somit eine einzige Achse mit zwei Lagern ausreichend. Dadurch ist nicht nur eine einfachere Montage bzw. eine einfachere Herstellung sichergestellt, vielmehr ist auch die Standfestigkeit des gesamten Riegelelementes verbessert, da jedes Lager eine Verschleißstelle darstellt.

Vorzugsweise ist die Achse starr mit der Hakenplatte verbunden und im Haken drehbar gelagert. Bei dieser Konstruktion steht besonders viel Lageraum zur Verfügung. Die Anordnung wird dann besonders haltbar, wenn die Hakenplatte fest (einstückig) mit der Achse verbunden ist. In diesem Fall kann man die Federmittel zwischen der Achse und den Haken einspannen, wodurch ein "versteckter" Aufbau der Feder sichergestellt wird. Als Federmittel eignet sich eine Schraubendrehfeder, welche die Achse an deren Ende umgibt. Dieser Aufbau ist besonders gedrängt.

Besonders bevorzugt ist die Ausführungsform der Erfindung, bei welcher die Federmittel in der Halteposition frei von unten zugänglich angebracht sind. Die Zugänglichkeit bedeutet gleichzeitig, daß eingedrungenes Wasser abfließen kann. Gegenüber den bisher bekannten Riegelelementen der gattungsgemäßen Art ist dies ein besonders großer Vorteil, da bei den bekannten Riegelelementen die Feder zwischen der Riegelplatte und dem Haken in einem Topf saß, der für eingedrungenes Wasser eine "Falle" bildete. Die sich dadurch ergebene Korrosion vermindert die Lebensdauer eines solchen Riegelelementes beträchtlich bzw. führt zu frühzeitigen Störungen.

Vorzugsweise umfaßt der Haken zwei Schenkel, die an ihren Enden über ein Querstück miteinander verbunden sind, in welchem die Achse gelagert ist. Dadurch ist zum einen die Montage der Achse sehr einfach, zum anderen ist das Gewicht des Hakens trotz ausreichender Festigkeit relativ niedrig.

Das Querstück weist vorzugsweise einen U-förmigen Querschnitt mit zwei Schenkeln auf, zwischen denen die Antriebsrolle angebracht ist. Die Achse ist somit beidseitig der Abweisrolle gelagert und kann damit relativ große Kräfte auf die Abweisrolle aufnehmen.

Bevorzugte Ausführungsformen der Erfindung ergeben sich aus den Unteransprüchen.

Nachfolgend wird ein Ausführungsbeispiel der Erfindung anhand von Abbildungen näher erläutert. Hierbei zeigen
- **Fig. 1**: eine Seitenansicht eines Riegelelements;
- **Fig. 2**: eine Draufsicht auf das Riegelelement nach Fig. 1;
- **Fig. 3**: eine Vorderansicht auf das Riegelelement nach Fig. 1;
- **Fig. 4**: einen Teil-Schnitt des Riegelelements entlang der Linie IV-IV aus Fig. 2 mit dem Haken in Ruheposition und
- **Fig. 5**: eine vergrößerte Seitenansicht des Riegelelements nach Fig. 1 in teilweise geschnittener Darstellung.

Das in den Abbildungen gezeigte Riegelelement umfaßt einen Haken 10, der auf einer ersten Lagerachse 24 schwenkbar gelagert ist. Die erste Lagerachse 24 ist zwischen zwei Schenkeln 21,21' eines Rahmens 20 gelagert. Die Schenkel 21,21' sind C-förmig mit nach außen ragenden Verstärkungsrändern ausgebildet und über eine Bodenplatte 22 miteinander verbunden. Der Boden 22 weist einen mittleren Bereich 32 auf, in welchem Schienenbefestigungen 23,23',23'' zum Befestigen des Riegelelements im Boden des Frachtraums angebracht sind. Zwischen dem verstärkten mittleren Bereich 32 und den Schenkeln 21,21' sind Schwächungszonen 31,31' vorgesehen. Diese Schwächungszonen 31,31' stellen nachgiebige Elemente dar, so daß bei einem Schlag auf den Haken 10 die Schenkel 21,21' relativ zum mittleren Bereich 32 bzw. zu den Schienenbefestigungen 23 unter Verbiegung der Schwächungszonen 31,31' ausweichen können.

In den Schenkeln 21,21' ist die erste Lagerachse 24 befestigt.

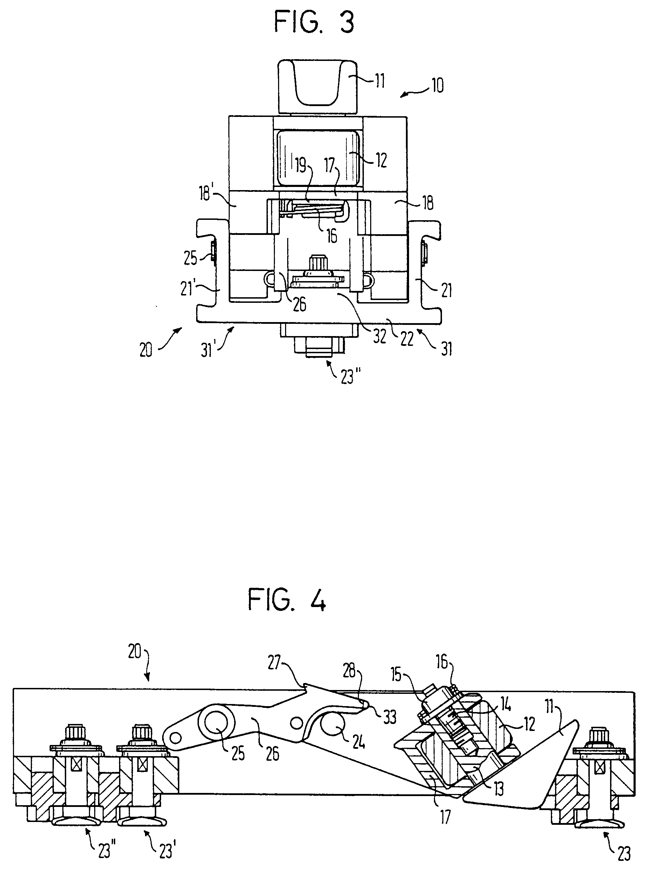

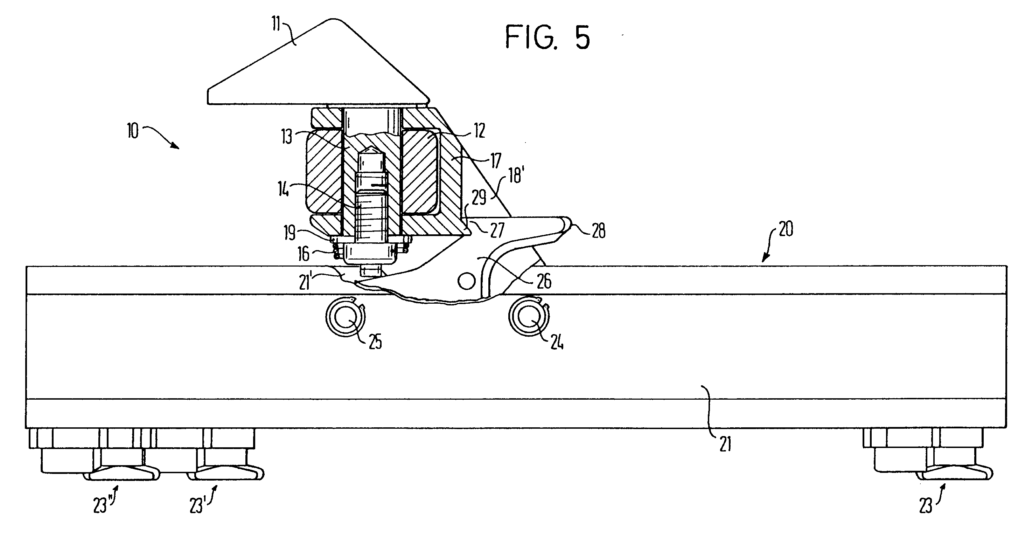

Der auf der ersten Lagerachse 24 gelagerte Haken 10 weist an seinem, der ersten Lagerachse 24 gegenüberliegenden Ende eine Hakenplatte 1 auf, die auf einer Achse 13 fest angebracht ist. Der Haken 10 weist weiterhin zwei Schenkel 18,18' auf, die durch ein Querstück 17 bei der Hakenplatte verbunden sind. Das Querstück 17 weist einen im wesentlichen U-förmigen Querschnitt auf (siehe Fig. 4 und 5). Die Achse 13 ist durch das Querstück 14 hindurchgeführt und in diesem drehbar mittels Gleitlagern gelagert.

An ihrem, der Hakenplatte 11 gegenüberliegenden Ende ist die Achse 13 mittels eines Gewindebolzens 14 im Querstück 17 gesichert. Der Gewindebolzen weist eine endseitige Mutter 15 auf, welche eine Feder-Befestigungsplatte gegenüber der Achse 13 drehfest sichert. Zwischen der Feder-Befestigungsplatte 19 und dem Querstück 17 ist eine Schrauben-Drehfeder 16 so eingespannt, daß sie die Hakenplatte 11 in der in den Abbildungen gezeigten Position hält und beim Drehen der Hakenplatte 11 samt ihrer Achse 13 nach der einen oder nach der anderen Richtung jeweils gespannt wird.

Auf der Achse 13 sitzt zwischen den Schenkeln des Querstücks 17 eine Abweisrolle 22, die mittels eines Gleitlagers (nicht gezeichnet) drehbar zur Achse 13 ist.

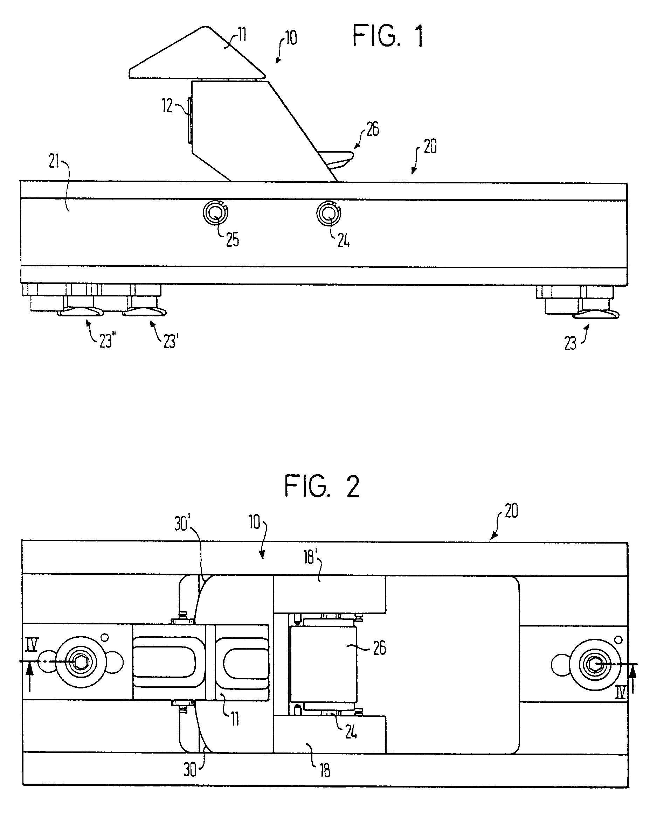

Das Querstück 17 ist im Bereich der Abweisrolle 12 mit zurückgesetzten und abgerundeten Abweiskanten 30,30' ausgestattet, so daß dann, wenn ein Container in einer Richtung senkrecht zur Zeichenebene nach den Fig. 1 oder 5 auf den vorderen Bereich des Hakens 10 trifft, die führende Kante des Containers an einer der Abweiskanten 30 oder 30' (je nach Richtung) und über die Abweisrolle 12 gleiten kann. Dabei wird gleichzeitig die Hakenplatte 11 unter Spannen der Feder 16 verdreht, so daß keine wesentlichen Kräfte seitwärts auf das Riegelelement bzw. den Haken 10 wirken.

Der Haken 10 wird in der in den Fig. 1 und 5 gezeigten Position durch ein Raststück 26 gehalten, das im Rahmen 20 auf einer zweiten Lagerachse 25 schwenkbar gelagert ist. Die Fixierung der Position wird hierbei durch einen Haken 27 am einen Ende des Raststückes 26 gesichert, der mit einem Vorsprung 29 am Querstück 17 in Eingriff gelangt. Zum Lösen des Hakens 10 aus seiner in den Fig. 1 und 5 gezeigten Halteposition drückt man auf ein Ende 28 des Raststücks 26, so daß der Vorsprung 29 und der Haken 27 außer Eingriff gelangen. Dann kann der Haken 10 in die in Fig. 4 gezeigte Position verschwenkt werden, in welcher das Ende 28 in eine Kerbe 33 des Hakens 10 einschnappt. Zum Halten des Raststücks 26 und des Hakens 10 sind (in den Zeichnungen nicht dargestellte) Federn zusätzlich vorgesehen.

### Bezugszeichenliste

- 10: Haken
- 11: Hakenplatte
- 12: Abweisrolle
- 13: Achse
- 14: Gewindebolzen
- 15: Mutter
- 16: Feder
- 17: Querstück
- 18, 18': Schenkel
- 19: Feder-Befestigungsplatte
- 20: Rahmen
- 21,21': Schenkel
- 22: Bodenplatte
- 23, 23',23'': Schienenbefestigung
- 24: erste Lagerachse
- 25: zweite Lagerachse
- 26: Raststück
- 27: Haken
- 28: Ende
- 29: Vorsprung
- 30, 30': Abweiskante
- 31, 31': Schwächungszone
- 32: mittlerer Bereich
- 33: Kerbe

## Patentansprüche

1. Riegelelement zum verriegelten Halten von Gegenständen, insbesondere von Containern, im Frachtraum von Flugzeugen, mit einem Haken (10), der um eine horizontale Achse aus einer unteren Ruheposition in eine obere Halteposition verschwenkbar in einem Rahmen (10) gehalten ist und an seinem Ende eine Hakenplatte (11) aufweist, die auf einer Achse (13) am Haken (10) in einer - in der Halteposition - horizontalen Ebene aus einer Einhakposition in eine Ausweichposition verschwenkbar ist, und mit mindestens einer Abweisrolle (12), die - in der Halteposition - um eine vertikale Achse (13) derart drehbar am Haken (10) gelagert ist, daß ein, die Hakenplatte (11) verschwenkender Gegenstand an der Abweisrolle (12) entlang führbar ist, wobei Federmittel (16, 19) vorgesehen sind, die derart ausgebildet sind und mit der Hakenplatte (11) in Wirkverbindung stehen, daß die Hakenplatte (11) in die Einhakposition beaufschlagt wird,
**dadurch gekennzeichnet,**
daß die Abweisrolle (12) auf der Achse (13) der Hakenplatte (11) gelagert ist.

2. Riegelelement nach Anspruch 1,
**dadurch gekennzeichnet,**
daß die Achse (13) starr mit der Hakenplatte (11) verbunden und im Haken (10) drehbar gelagert ist.

3. Riegelelement nach Anspruch 2,
**dadurch gekennzeichnet,**
daß die Federelemente (16, 19) zwischen der Achse (13) und dem Haken (20) eingespannt sind.

4. Riegelelement nach Anspruch 3,
**dadurch gekennzeichnet,**
daß die Federmittel eine Schraubendrehfeder (16) umfassen, welche die Achse (13) an deren Ende umgibt.

5. Riegelelement nach einem der vorhergehenden Ansprüche,
**dadurch gekennzeichnet,**
daß die Federmittel (16, 19) - in der Halteposition - im wesentlichen derart frei von unten zugänglich angebracht sind, daß eingedrungenes Wasser abfließen kann.

6. Riegelelement nach einem der vorhergehenden Ansprüche,
**dadurch gekennzeichnet,**
daß der Haken (20) zwei Schenkel (18,18') umfaßt, die an ihren Enden über ein Querstück (17) miteinander verbunden sind, in dem die Achse (13) gelagert ist.
